(19) Europäisches Patentamt
European Patent Office
Office européen des brevets

(11) Publication number: **0 201 179 B1**

(12) # EUROPEAN PATENT SPECIFICATION

(45) Date of publication of patent specification: **27.02.91**

(51) Int. Cl.$^5$: **C04B 33/14**, C09C 1/36, C09C 1/00

(21) Application number: **86302208.3**

(22) Date of filing: **25.03.86**

(54) **Black ceramic powder and articles made therefrom.**

(30) Priority: **01.04.85 CN 85102464**

(43) Date of publication of application:
**17.12.86 Bulletin 86/46**

(45) Publication of the grant of the patent:
**27.02.91 Bulletin 91/09**

(84) Designated Contracting States:
**AT DE FR GB**

(56) References cited:
**DE-A- 2 830 920**
**US-A- 4 130 439**

**CHEMICAL ABSTRACTS, vol. 82, no. 22, 2nd June 1975, page 118, abstract no. 142048p, Columbus, Ohio, US; & JP-A-74 88 916 (ASAHI CHEMICAL INDUSTRY CO., LTD) 26-08-1974**

**CHEMICAL ABSTRACTS, vol. 102, no. 4, 28th January 1985, page 387, abstract no. 30780w, Columbus, Ohio, US; & JP-A-59 35 156 (MATSUSHITA ELECTRIC INDUSTRIAL CO., LTD) 27-08-1984**

(73) Proprietor: **SHANDONG PROVINCE NEW MATERIALS INSTITUTE**
**Jing Ten Road**
**Jinan Shandong Province(CN)**

(72) Inventor: **Cao, Shuliang**
**Jungshi Road**
**Jinan Shandong(CN)**

(74) Representative: **Brown, John David et al**
**FORRESTER & BOEHMERT Widenmayerstrasse 4/I**
**D-8000 München 22(DE)**

EP 0 201 179 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a black ceramic powder material. More particularly, this invention relates to a method of producing such a black ceramic powder material and articles manufactured therefrom, which powder material may be produced from a variety of industrial wastes and natural metal ores containing titanium, vanadium, chromium and manganese. The invention further relates to a black ceramic powder material and articles, producable therefrom, which powder is produced by the method of the present invention.

For thousands of years, ceramics have been produced from naturally occurring ceramic materials. However, the manufacture of ceramic materials and articles having specific properties from industrial production materials has been carried out only relatively recently. In order to meet new demands throughout the world, novel ceramic materials are continuously being developed. One type of ceramic material that is in particular demand is black ceramic, because black ceramic articles have the ability to absorb light and heat energy with great efficiency and such articles also emit infra-red rays when heated. Properties of ceramics also include corrosion resistance, oxidation-resistance and resistance to peeling and ageing. Furthermore, ceramics may also be used at high temperatures. Ceramic bodies are also hard and these and other properties possessed by the black ceramic bodies make them ideal materials for use as absorbing and emitting element in many fields such as the field of transference between heat and light energy.

Presently, the black pigment to be added to a ceramic material in the manufacture of a black ceramic article comprises industrially produced oxides of manganese, cobalt, nickel and other suitable compounds. However, the industrially produced compounds currently used in the production of black ceramic articles are extremely expensive and only produced in relatively small quantities so that the manufacture of black ceramic articles in large quantities is extremely difficult and expensive. Thus, at present, infra-red absorbing and emitting elements are made by coating a layer of radiating or absorbing material onto a substrate which does not have the required property, such as a metal, a silicon carbide or zircon sand ceramic, a plastics or other such material. Although articles made by this method have proved adequate with regard to radiation absorption properties, such articles are somewhat complex to manufacture and have the disadvantages that the coating layer tends to age and peel off. Furthermore, the coating method is also relatively expensive.

Accordingly, it has been an important goal, researched by scientists in the field for many years, to manufacture a black ceramic material and various articles manufactured therefrom, having a high absorption and radiation rate and ageing resistance at a relatively low cost. The present inventors have unexpectedly found that some industrial wastes and natural ores can be used for the manufacture of such a black ceramic material.

One object of the present invention is to provide a method of producing a black ceramic article from a variety of industrial wastes and/or natural ores, which contain titanium, vanadium, chromium, manganese and iron, all of which are relatively common elements that are easy to obtain. Another object of this invention is to provide a black ceramic powder material, containing 0.1 - 20% of titanium dioxide by weight, as well as other essential elements. The third object of the present invention is to provide various shaped black ceramic articles containing at least 0.05 - 20% titanium dioxide, and other essential elements, and to provide a black pigment, comprising such a ceramic powder, which pigment can be used in coating rubber, plastics materials, ceramic or any other suitable substrate and as use as a black colouring additive to other compositions.

According to the present invention there is provided a process for producing a black ceramic powder from a starting material comprising an industrial waste selected from the group consisting of vanadium residue, pyrite cinder and chromium slag, the steps of the process are selected from any one of:

(1) grinding the starting material to obtain a suitable size black ceramic power less than 20 mesh (0.84 mm);

(2) calcining the starting material at a temperature above 800° C for 1-60 minutes and then grinding; or

(3) grinding the starting material into a suitable size powder, shaping the powder into a green body with a suitable form, calcining the green body and grinding the calcinated body into a suitable sized powder; characterized in that the powder comprises a mixture of 0.5% to 2% by weight of vanadium pentoxide, 3% to 20% by weight titanium dioxide, 4% to 15% by weight manganese oxide, 1% to 20% by weight chromium (III) oxide, and 30%-80% by weight iron trioxide based on the weight of the black ceramic powder.

The present invention further provides a black ceramic powder produced in accordance with the process of the present invention and a black ceramic article manufactured from such a black ceramic powder.

The most important feature of the method of the present invention is that the starting materials are relatively inexpensive and easy to obtain. According to the present invention industrial wastes can be used. Depending on the selected starting material, some additives may be added, but such additives are not necessary. The essential feature of the material from which the black ceramic powder is made is that the total amount of titanium dioxide, vanadium pentoxide, chromium (III) oxide and manganese oxide contained in the starting material is at least 3% by weight, at least 1% by weight of titanium dioxide and at least 1% by weight of vanadium pentoxide being present. Besides the advantage of the low cost and ease of access to the starting material, the method of the present invention is, further, very simple to carry out. Conventional processes and apparatuses in this field can be used and there is no need for special equipment or special processing steps. Raw materials which may be used as starting materials for the production of black ceramic powder according to the present invention are industrial wastes such as pyrite cinder, vanadium residue and chromium slag. The term "vanadium residue" refers to the residue after impregnation of a vanadium slag, which slag is obtained by refining liquid iron containing vanadium, which liquid iron is the product of processing vanatititaniferrous magnetite.

Additives which may be added to the starting material in the production of a black ceramic powder according to the present invention include common clay, porcelain clay, porcelain stone, earthenware clay, coal clay, shale, coal stone, red mud, boron mud, talcum, titanium slag, lemon slag, furtural slag, methyl cellulose, starch, arabic gum, water glass, binder and some metal oxides.

Many industrial wastes cause environmental problems because, at present, no use can be found for them and thus they cannot be sold. Furthermore, to remove such industrial wastes is expensive and treatment is required to ensure that they do not pollute the environment. It is, therefore, particularly preferable that the raw materials for the present invention are industrial wastes, such as vanadium residue, pyrite cinder and chromium slag. Particularly preferred is vanadium residue from which an extremely good ceramic may be obtained and to which, in the present invention, no additives need be added, according to experiments carried out by the inventors.

The process for producing a black ceramic powder material of the present invention may be any conventional one, such as:

1. Grinding the raw material, which may comprise a single material or a mixture of materials, to obtain a suitable size black ceramic powder, less than 20 mesh (0.84 mm);
2. Calcinating the starting material above a temperature of 800°C, preferably 1000-1400°C, for 1 - 60 minutes and then grinding; or
3. Grinding the starting material into a suitable size powder, shaping the powder into a green body with a suitable form, calcinating the green body and grinding the calcinated body into a suitable size powder.

A black ceramic powder material, produced by any one of the above mentioned processes, has good agglomerative properties. When shaped by conventional methods, it can be calcinated into various articles of various forms.

The composition of a black ceramic powder according to the present invention may vary within a broad range, depending on the composition, cost and location of the selected raw material, and on the composition of the overall starting material which may comprise additives. The black ceramic powder of the present invention comprises 0.5 - 2% by weight vanadium pentoxide, 3 - 20% by weight titanium dioxide, 4 - 15% by weight manganese oxide, 1 - 20% by weight chromium (III) oxide, 30 - 80% by weight iron trioxide and other elements may be present.

Other materials may be added during the process of manufacturing the articles of the present invention. However, the finished articles should contain a total amount of 1% by weight of titanium dioxide, vanadium pentoxide, chromium (III) oxide and manganese oxide. Preferably the finished articles should contain 0.1 - 2% by weight vanadium pentoxide, 1 - 12% by weight titanium dioxide, 1 - 15% by weight manganese oxide, 0.1 - 20% by weight chromium (III) oxide. The formed black ceramic articles may have many shapes, and may be used in many different applications, such as infra-red radiating elements, heat collectors, heat exchangers, heat radiators, furnace liners, surface decoration of buildings and other ordinary ceramic articles. Infra-red radiating elements include infra-red heaters and infra-red generators in the form of plates, tubes, convexes and the like, either with coating or without coating.

Besides the use of the black ceramic powder in direct manufacture of commercially useful black ceramic articles, the black ceramic powder can also be used in various applications as follows:

1. Use as a black pigment which may be added into a black glaze or composite coating or any composition which may require a black colouration.
2. Use as a heat-absorbing material which may be applied on the surface of a furnace in order to absorb the heat of the atmosphere within the furnace and transmit it to the objects to be heated.
3. Use as a stable black powder filler which may be used in plastics and rubber.

4. Use as a black filler which may be used in architectural decorative coatings and in manufacturing architectural decorative surface plate.

By way of illustration and for a better understanding of the present invention, several embodiments of the present invention will now be described, by way of example only, with reference to the following examples.

Example 1.

Vanadium residue was directly ground by a ballmill to 160 mesh powder.

Example 2.

Vanadium residue was calcinated at 1150°C for 0.5 hour and then ground to 160 mesh powder. The composition of the powder obtained is indicated in the following table.

Composition table (%) by weight

| $V_2O_5$ | $Fe_2O_3$ | $SiO_2$ | $Mn_2O_3$ | $TiO_2$ | $Cr_2O_3$ | $MgO$ | $Al_2O_3$ | $CaO$ |
|---|---|---|---|---|---|---|---|---|
| 1.18 | 64.42 | 13.26 | 6.74 | 8.52 | 1.19 | 0.65 | 3.13 | 0.96 |

Example 3.

Two parts of pyrite cinder powder having a size of 160 mesh, ground by a dry method, and one part of chromium residue powder having a size of 140 mesh were mixed together with a suitable amount of water. The homogeneous mixture so formed was shaped into a bar of 10 mm diameter by conventional means. The bar was then broken into cylinder shapes of length 15 - 20 mm after drying. These cylinder shaped pellets were then calcinated at 1220°C for 10 minutes and then ground into 160 mesh black powder.

Example 4.

A mixture of 98 parts of the powder obtained in Example 1 and two parts of methyl cellulose was mixed with a suitable amount of water and made into particles having a diameter of between 0.5 - 2 mm. 70 parts of clay, 10 parts of arenaceous quartz and 10 parts of feldspar were then mixed and ground into powder. 10 parts of the particles and 90 parts of the powder were mixed, and shaped into the form of a small plate having the dimensions of 20 mm x 20 mm x 5 mm. The plate was then calcinated at 1200°C for one hour. The resulting product was a small porcelain plate having a white base, in which there were a lot of black flecks.

Example 5.

The black powder of Example 2 was used as a filler in the manufacture of polyethylene plastics, substituting for the ordinary carbonate filler. In a conventional process, application of 10% by weight of the powder of Example 2, based on the total amount of the powder and polyethylene, and using no other black pigment, gave a black polyethylene product.

Example 6.

Black ceramic powder, produced in Example 1, was mixed with a suitable amount of water and was applied onto the inner walls of a calcinating furnace. After 24 hours it was subjected to a temperature of 1200° - 1400°C and formed a black ceramic coating on the surface of the wall. The depth of the coating

was 0.2 - 1 mm. A comparison with a similar furnace having no heat absorbing material applied thereto showed an energy saving of 3 - 5% in the case where the black ceramic coating was applied.

Example 7.

99.5 parts of the powder of Example 1 was mixed with 0.5 parts of methyl cellulose and water and was then shaped, dried, and calcinated at 1120 °C for one hour to produce a ceramic tube having an outer diameter of 31 mm, an inner diameter of 25 mm and a height of 40 mm. The radiating rate of the tube was 0.84 - 0.86 at 500 - 600 °C.

Example 8.

A mixture of 60 parts of black ceramic powder produced in Example 2, 20 parts of clay, 10 parts of talcum powder and 0.5 parts of sodium carbonate was ground with a ball-mill, then shaped, dried and calcinated at 1100 °C for one hour to produce a ceramic tube having an outer diameter of 32 mm, an inner diameter of 25 mm and a length of 1000 mm. The radiating rate of the tube was 0.8394 - 0.8620 at 500 - 600 °C.

Example 9.

A mixture of 7 parts of ceramic powder produced by Example 3 and 3 parts of 80 mesh clay powder was shaped and calcinated at 1170 °C for 6 hours. The black ceramic body produced thereby had a radiating rate of 0.857 - 0.867 at 500 - 600 °C.

Example 10.

The mixture produced in Example 8 was prepared as a pulp and was then poured into a mould wherein an electrothermal wire was already disposed. The shaped article produced therefrom was calcinated at 1100 °C for 1 hour. The resulting product was a core-type infra-red element, having a diameter of 15 mm, a length of 400 mm and an electric work rate of 300 w.

Example 11.

The mixture of Example 8 was shaped by moulding, then dried and calcinated at 1100 °C for 1 hour. The product was a black solar energy collector being a tank with an inlet and outlet for water, having a length of 640 mm, width of 420 mm, height of 70 mm, and a wall thickness of 3 mm.

Example 12.

A mixture of 60 parts of the ceramic powder produced in Example 2 and 40 parts of clay powder of 80 mesh was shaped and calcinated at 1140 °C for 2 hours to produce a black ceramic plate of 100 mm x 100 mm x 8 mm.

Example 13.

The mixture of Example 8 was prepared as a pulp with water. The pulp was poured into a mould, which moulded the pulp into the shape of a figure. After releasing the pulp, the figure was dried and calcinated at 1100 °C for 1 hour. The product has a height of 300 mm and a wall thickness of 2 mm.

## Claims

1. A process for producing a black ceramic powder from a starting material comprising an industrial waste selected from the group consisting of vanadium residue, pyrite cinder and chromium slag, the steps of the process are selected from any one of:
   (1) grinding the starting material to obtain a suitable size black ceramic powder less than 20 mesh (0.84 mm);
   (2) calcining the starting material at a temperature above 800 °C for 1-60 minutes and then grinding; or
   (3) grinding the starting material into a suitable size powder, shaping the powder into a green body with a suitable form, calcining the green body and grinding the calcinated body into a suitable sized powder;
   characterized in that the powder comprises a mixture of 0.5% to 2% by weight of vanadium pentoxide, 3% to 20% by weight titanium dioxide, 4% to 15% by weight manganese oxide, 1% to 20% by weight chromium (III) oxide, and 30%-80% by weight iron trioxide based on the weight of the black ceramic powder.

2. A process according to Claim 1 wherein the calcinating temperature is 1000 °C to 1400 °C.

3. A process according to Claim 1 or 2 wherein the industrial waste is vanadium residue.

4. A black ceramic powder comprising vanadium pentoxide, titanium dioxide, manganese oxide, chromium (III) oxide and iron trioxide produced in accordance with the process of any one of Claims 1 to 3.

5. A ceramic article made from the black ceramic powder of Claim 4.

6. A ceramic article according to Claim 5 containing 0.1% to 2% by weight vanadium pentoxide, 1% to 12% by weight titanium dioxide, 1% to 15% by weight manganese oxide, 0.1% to 20% by weight chromium (III) oxide.

7. A ceramic article according to Claim 5 selected from the group consisting of an infrared absorbing or emitting element, a heat collector, a heat exchanger, a heat radiator, a furnace liner and a ceramic plate.

8. A black ceramic solar energy collector formed from the black ceramic powder according to Claim 4.

## Revendications

1. Procédé de fabrication d'une poudre céramique noire à partir d'une matière première comprenant un déchet industriel choisi dans le groupe qui comprend les résidus de vanadium, les cendres de pyrite et les laitiers de chrome, les étapes du procédé étant choisies parmi l'une des étapes suivantes :
   (1) le broyage de la matière première sous forme d'une poudre céramique noire de dimensions convenables inférieures à 0,84 mm (20 mesh),
   (2) la calcination de la matière première à une température supérieure à 800 °C pendant 1 à 60 min, puis le broyage, ou
   (3) le broyage de la matière première sous forme d'une poudre de dimensions convenables, la mise de la poudre sous forme d'un corps cru de forme convenable, la calcination du corps cru et le broyage du corps calciné sous forme d'une poudre de dimensions convenables,
   caractérisé en ce que la poudre est un mélange de 0,5 à 2 % en poids de pentoxyde de vanadium, 3 à 20 % en poids de bioxyde de titane, 4 à 15 % en poids d'oxyde de manganèse, 1 a 20 % en poids d'oxyde de chrome (III), et 30 a 80 en poids de trioxyde de fer, par rapport au poids de la poudre céramique noire.

2. Procédé selon la revendication 1, dans lequel la température de calcination est comprise entre 1 000 et 1 400 °C.

3. Procédé selon la revendication 1 ou 2, dans lequel les déchets industriels sont des résidus de

vanadium.

4. Poudre céramique noire contenant du pentoxyde de vanadium, du bioxyde de titane, de l'oxyde de manganèse, de l'oxyde de chrome (III) et du trioxyde de fer, et préparée par mise en oeuvre du procédé selon l'une quelconque des revendications 1 à 3.

5. Article céramique fabriqué à partir de la poudre céramique noire de la revendication 4.

6. Article céramique selon la revendication 5, contenant 0,1 à 2 % en poids de pentoxyde de vanadium, 1 à 12 % en poids de bioxyde de titane, 1 à 15 % en poids d'oxyde de manganèse, 0,1 à 20 % en poids d'oxyde de chrome (III).

7. Article céramique selon la revendication 5, choisi dans le groupe qui comprend un élément d'absorption ou d'émission d'infrarouge, un collecteur de chaleur, un échangeur de chaleur, un radiateur thermique, un revêtement de four et une plaque céramique.

8. Collecteur d'énergie solaire de céramique noire, formé de la poudre céramique noire selon la revendication 4.

## Ansprüche

1. Verfahren zur Herstellung eines schwarzen keramischen Pulvers aus einem Ausgangsmaterial, das ein industrielles Abfallprodukt umfaßt, ausgewählt aus der Gruppe, die aus Vanadinrückstand, Pyritzunder und Chromschlacke besteht, wobei die Schritte des Verfahrens ausgewählt sind aus den folgenden:

   (1) Mahlen des Ausgangsmaterials, um ein schwarzes keramisches Pulver in einer geeigneten Größe von weniger als 20 mesh (0,84 mm) zu erhalten;

   (2) Kalzinieren des Ausgangsmaterials bei einer Temperatur oberhalb 800° C für 1-60 Minuten und anschließendes Mahlen; oder

   (3) Mahlen des Ausgangsmaterials zu einem Pulver geeigneter Größe, Ausformen des Pulvers zu einem Grünling geeigneter Form, Kalzinieren des Grünlings und Mahlen des kalzinierten Körpers zu einen Pulver geeigneter Größe;

   dadurch gekennzeichnet, daß das Pulver ein Gemisch von 0,5 Gew.-% bis 2 Gew.-% Vanadinpentoxid, 3 Gew.-% bis 20 Gew.-% Titandioxid, 4 Gew.-% bis 15 Gew.-% Manganoxid, 1 Gew.-% bis 20 Gew.-% Chrom(III)-oxid und 30 Gew.-% bis 80 Gew.-% Eisentrioxid, bezogen auf das Gewicht des schwarzen keramischen Pulvers, umfaßt.

2. Verfahren nach Anspruch 1, dadurch gekennzeichnet, daß die Kalzinierungstemperatur 1000° C bis 1400° C beträgt.

3. Verfahren nach Anspruch 1 oder 2, dadurch gekennzeichnet, daß das industrielle Abfallprodukt Vanadsinrückstand ist.

4. Schwarzes keramisches Pulver, welches Vanadinpentoxid, Titandioxid, Manganoxid, Chrom(III)-oxid und Eisentrioxid umfaßt, hergestellt gemäß dem Verfahren nach einem der Ansprüche 1 bis 3.

5. Keramischer Artikel, hergestellt aus dem schwarzen keramischen Pulver nach Anspruch 4.

6. Keramischer Artikel nach Anspruch 5, dadurch gekennzeichnet, daß er 0,1 Gew.-% bis 2 Gew.-% Vanadinpentoxid, 1 Gew.-% bis 12 Gew.-% Titandioxid, 1 Gew.-% bis 15 Gew.-% Manganoxid, 0,1 Gew.-% bis 20 Gew.-% Chrom(III)-oxid enthält.

7. Keramischer Artikel nach Anspruch 5, ausgewählt aus der Gruppe, die aus einem infrarotabsorbierenden oder -emittierenden Element, einem Wärmekollektor, einem Wärmetauscher, einem Wärmestrahler, einem Ofenauskleidungsmaterial und einer keramischen Platte besteht.

8. Schwarzer keramischer Sonnenenergiekollektor, hergestellt aus dem schwarzen keramischen Pulver nach Anspruch 4.